# EUROPÄISCHE PATENTSCHRIFT

(11) **EP 2 842 855 B1**
(45) Veröffentlichungstag und Bekanntmachung des Hinweises auf die Patenterteilung: **14.02.2018**
(21) Anmeldenummer: 14182310.4
(22) Anmeldetag: 26.08.2014
(51) Int. Cl.: B62K 27/06, B60G 3/14, B60G 11/22, B62D 63/06, F16F 1/37, F16F 1/373, F16F 1/377

(54) **Federung für einen Fahrradanhänger oder Kinderwagen**
Suspension for a bicycle trailer or buggy
Système amortisseur pour une remorque pour bicyclettes ou poussette

(30) Priorität: 26.08.2013 DE 102013109230
(43) Veröffentlichungstag der Anmeldung: 04.03.2015
(73) Patentinhaber: Croozer GmbH, 50825 Köln (DE)
(72) Erfinder: Stanislowski, Roger, 28357 Bremen (DE); Koc, Mehmet, 50735 Köln (DE); Kabir Kumar, Bhanja, 50769 Köln (DE); Hüttner, Thomas, 50735 Köln (DE)
(74) Vertreter: Lenzing Gerber Stute

(56) Entgegenhaltungen:
- CA-A1- 2 228 344
- DE-A1- 2 237 516
- DE-A1- 2 843 149
- DE-A1- 3 434 088
- DE-A1-102004 041 599
- DE-A1-102007 026 087
- DE-A1-102007 044 973
- DE-U1- 20 219 545
- DE-U1- 20 311 736
- DE-U1- 29 807 371
- DE-U1-202004 006 386
- DE-U1-202008 012 389
- US-A- 2 549 320
- US-A1- 2002 163 158
- US-A1- 2006 273 540
- US-A1- 2010 244 405

## Beschreibung

Die Erfindung betrifft einen Fahrradanhänger mit einer Radaufhängung, insbesondere zum Transport von Kindern, der ein Chassis mit seitlichen Rahmenteilen und mindestens zwei Räder aufweist, die jeweils an einer Radschwinge gelagert sind, wobei für jede Radschwinge mindestens ein elastisches Element vorgesehen ist, über das sich die Radschwinge gegenüber dem Chassis abstützt, und wobei beide Radschwingen seitlich über das Chassis hinausstehen und an den seitlichen Rahmenteilen des Chassis vorbei verschwenkt werden können.

Ein Fahrradanhänger mit diesen Merkmalen ist aus der CA 2228344 A1 bekannt.

Eine Federung für einen Fahrradanhänger zu entwickeln, die bei geringer Beladung z.B. mit einem Baby als Passagier genauso wirksam ist wie bei voller Beladung z.B. mit zwei sechsjährigen Kindern und Gepäck, ist technisch anspruchsvoll. Dies gilt insbesondere vor dem Hintergrund, dass die Zuladung für einen Fahrradanhänger das Eigengewicht des Fahrradanhängers in aller Regel übersteigt, wobei die Zuladung um mehr als das Eigengewicht des Fahrradanhängers variieren kann. Damit eine Federung optimal wirken kann, muss sie auf das Gewicht abgestimmt sein, das gefedert werden soll. Die Federung soll bei geringstmöglicher Beladung bereits ansprechen, darf aber gleichzeitig bei maximaler Beladung nicht durchschlagen. Ist die Feder weich, ist die Federung beispielsweise für ein zu transportierendes Baby optimal, aber der Fahrradanhänger setzt bei voller Beladung auf. Ist die Feder hart, setzt der Fahrradanhänger bei voller Beladung zwar nicht mehr auf, aber das Federsystem ist für das Baby wirkungslos, da die Feder bei dem geringen Gewicht noch nicht anspricht. Ideal ist, wenn eine Feder bei geringer Beladung sensibel anspricht aber auch bei maximaler Beladung noch Federweg hat und nicht durchschlägt. Um dieses Problem zu lösen, werden Federungssysteme in Fahrradanhängern mit einer gewichtsabhängigen Einstellung der Federhärte angeboten. Eine korrekte Einstellung für jede Fahrt ist allerdings vergleichsweise aufwändig und umständlich. Die Erfahrung hat gezeigt, dass der durchschnittliche Nutzer eines solchen Fahrradanhängers eine Feder in der Regel einmalig eher hart einstellt und die Einstellung danach belässt, auch wenn sie für die verschiedenen Beladungssituationen nicht optimal ist.

Bei einem bekannten Fahrradanhänger in Leichtbauweise, dem Modell Cougar der kanadischen Marke Chariot®, besteht der Rahmen aus einem Chassis, an dem die Räder aufgehängt und die Deichsel befestigt ist, und einer Fahrgastzelle, die vom Chassis getragen wird. Das Chassis besteht im Wesentlichen aus zwei Längsträgern, die in ihrem mittleren Bereich durch zwei Querträger miteinander verbunden sind. Sowohl im vorderen Bereich als auch im hinteren Bereich sind zwischen den Trägern Rahmenelemente der Fahrgastzelle gelenkig eingehängt, wobei die Fahrgastzelle über dem Chassis zusammenfaltbar ist. Dieser Fahrradanhänger ist gefedert. Hierfür ist an jedem hinteren Ende der Längsträger jeweils eine zweilagige Blattfeder vorgesehen, an deren freien hinteren Ende jeweils ein Rad gelagert ist. Die Blattfedern sind an den Längsträgern mit einer Haltevorrichtung gehalten. An jeder der Blattfedern ist eine arretierbare und verstellbare Klemmvorrichtung vorgesehen, mit denen der Elastizitätsgrad der Blattfeder eingestellt werden kann. Das Konstruktionsprinzip dieser Federung ist in der DE 202 19 545 U1 offenbart. Diese einstellbare Federung hat sich über viele Jahre bewährt. Allerdings ist sie vergleichsweise teuer in der Herstellung, und die Dämpfung der Radaufhängung beschränkt sich auf Reibungseffekte zwischen den Federblättern der Blattfedern. Ist die Federung auf "weich" eingestellt, wird die gesamte Last nur von einem Federblatt aufgenommen, eine Schwingungsdämpfung wird in diesem Fall nicht erzielt. Ein weiterer Nachteil besteht darin, dass die Einstellelemente bei normalem Gebrauch durch Witterungseinflüsse korrodieren, so dass insbesondere Einstellschrauben nicht mehr bewegt werden können, was damit eine Einstellung der Federhärte unmöglich macht.

Eine andere Möglichkeit der Federung ist in der DE 10 2007 026 087 A1 offenbart. Die Räder des darin offenbarten Fahrradanhängers sind an einem Radträger gelagert, der über eine Halteeinrichtung am Fahrradanhänger befestigt ist. Der Radträger ist über ein Federelement aus einem Elastomer zum Dämpfen von durch Fahrbahnunebenheiten verursachten Stößen an der Haltevorrichtung abgestützt. Das Federelement weist dabei zwei nebeneinander angeordnete Schenkelabschnitte unterschiedlicher Länge auf, von denen der erstere, längere bei kleineren Lasten abstützend wirkt und der zweite, kürzere bei höheren Lasten zusätzlich abstützend wirkt, wenn nämlich der längere aufgrund der wirkenden Last um mehr als die Längendifferenz der beiden Schenkel zusammengedrückt ist. Die Kennlinie dieser Federung ist nicht einstellbar.

In der DE 10 2007 026 087 A1 wird ferner auf vorbekannte Fahrradanhänger verwiesen, bei denen als Federelement ein Elastomerkörper verwendet wird, der zwischen einer Achse und einem Rahmen des Anhängers verpresst ist und auf diese Weise Stöße abfedern soll. Auch diese Art der Federung ist nicht einstellbar.

Die DE102007044973A1 zeigt eine Drehfederachse für Fahrzeuge mit einem innerhalb eines Achsrohres drehbaren Drehstab und strangförmigen Gummielementen, die zwischen dem Achsrohr und dem Drehstab angeordnet und über Halteelemente in Richtung des Achsrohres gegen Herausrutschen gesichert sind.

Die DE202008012389U1 offenbart einen Fahrradanhänger mit seitlich an einer Bodenwanne vorbeigeführten Radschwingen. Zur Federung und Dämpfung der Schwingen sind jeweils ein Federstahlbügel und ein Elastomerblock mit konstantem Querschnitt in einer Kompressionsrichtung vorgesehen, wobei die Feder über ein Gegenlager mit der Bodenwanne verbunden ist und der Elastomerblock zwischen Federstahlbügel und Schwinge sitzt.

Die DE 2237516A1 offenbart ein torsionselastisches Federungselement für ein Fahrzeug mit einem Hohlkörper, mit einem darin untergebrachten und gegenüber diesem um seine Längsachse drehbaren Drehkörper und mit einem zwischen dem Hohlkörper und dem Drehkörper angeordneten, mit beiden Körpern verbundenen und den Hohlraum zwischen diesen Körpern in radialer Richtung ausführenden Federkörper, der aus einem schäumbaren elastischen Kunststoff besteht. Damit soll ein einfaches und billig herstellbares Federungselement bereitgestellt werden.

Demgegenüber liegt der Erfindung die Aufgabe zugrunde, eine Radaufhängung der eingangs genannten Art zur Verfügung zu stellen, die auf einer einfachen Konstruktion beruht und eine optimale Federung und Dämpfung des nicht motorisierten Fahrzeugs ermöglicht.

Die Aufgabe wird mit einem Fahrradanhänger mit den Merkmalen des Anspruchs 1 gelöst.

Als Radschwingen kommen sowohl geschobene Radschwingen in Betracht, deren Lagerung am Chassis in Fahrtrichtung hinter der Lagerung eines Rades an ihrem freien Ende liegt, als auch gezogene Radschwingen, deren Lagerung am Chassis in Fahrtrichtung vor dem Radlager des von ihnen getragenen Lagers liegt.

Unter nicht motorisierten Fahrzeugen werden hier und im Folgenden insbesondere solche verstanden, deren Verhältnis von Fahrzeugmasse zu üblichem Zuladungsgewicht im Bereich von 0.5 bis 6, insbesondere im Bereich von 0,8 bis 5 oder 1 bis 5 liegt. Beträgt das Eigengewicht eines Fahrradanhängers beispielsweise 15 kg und das Gewicht eines darin transportierten Kindes 20 kg, beträgt das Verhältnis von Fahrzeugmasse zu üblicher Zuladungsgewicht 1,3. Solche Fahrzeuge sind insbesondere Fahrradanhänger, Jogger und/oder Kinderwagen.

Die erfindungsgemäße Lösung der Erfindung besteht darin, zur Federung und Dämpfung der Radschwinge ein elastisches Element aus mindestens einem formstabilen Polyurethanweichschaum-Werkstoff zu verwenden. Als Polyurethanweichschaum-Werkstoffe kommen vorzugsweise Sylomer® und/oder Sylodin®, beides Werkstoffe der Getzner Werkstoffe GmbH, Bürs, Österreich, in Betracht, wobei sich insbesondere Sylomer® als besonders geeignet herausgestellt hat. Die Werkstoffe Sylomer® und Sylodin® werden insbesondere als schwingungs- und schalldämpfende Werkstoffe für den Hochbau und den Gleisbau sowie für die Schwingungsdämpfung von Maschinen angeboten. Die unter der Marke Cellasto® von BASF im Markt angebotenen Polyurethanweichschaum-Werkstoffe sind eine, wenngleich weniger bevorzugte, Alternative. Andere Polyurethanweichschaum-Werkstoffe mit Feder- und Dämpfungseigenschaften, die denen von Sylomer® vergleichbar oder sogar besser sind, sind natürlich ebenso bevorzugt. Besteht das elastische Element aus mehreren verschiedenen Polyurethanweichschaum-Werkstoffen, können sie beispielsweise formschlüssig ineinandergreifen oder miteinander verklebt sein. Polyurethanweichschaum-Werkstoffe sind dauerhaft formstabil und unempfindlich gegen kurzzeitige, auch extreme Überbelastung. Sie sind wetterstabil, verschleißen nicht und enthalten keine gesundheitsgefährdenden Stoffe. Eine Pflege oder Wartung ist nicht erforderlich.

Eine besondere Eigenschaft der genannten Polyurethanweichschaum-Werkstoffe ist ihre hohe Federungs- und Dämpfungswirkung, wobei die Federkennlinie zumindest in einem relevanten Teilbereich progressiv ist. Bei geringem Druck durch geringes Gewicht bzw. bei leichten Stößen ist der PU-Weichschaum weich und federt weich ein. Bei höherem Druck wird der PU-Weichschaum stärker komprimiert und härter. Ein Durchschlagen ist bei den im Betrieb des nicht motorisierten Fahrzeugs zu erwartenden Kräften nicht zu erwarten. Somit ist es möglich, eine gute Federung für das Fahrzeug sowohl bei geringer, als auch bei hoher Beladung zu ermöglichen. Gleichzeitig schwingen die genannten Polyurethanweichschaum-Werkstoffe nicht nach, sondern weisen eine hohe Eigendämpfung auf, was zu einem raschen Abbau der Schwingungsenergie bzw. einer hohen Schwingungsisolierung führt.

Damit ermöglicht die erfindungsgemäße Lösung ein Federungs- und Dämpfungssystem, dessen Schwingungsdämpfung auf die Zuladung, insbesondere die einsitzender Passagiere bei einem Verhältnis von Fahrzeugmasse zu Zuladung von 0,5 bis 0,8 ähnlich wirksam ist wie bei einem Verhältnis von 3 bis 6, ohne dass das Federungs- und Dämpfungssystem ladungsbezogen eingestellt werden muss.

In Abhängigkeit von den durch die Radschwinge auf das Federelement aufgebrachten Kräften und der dabei zurückgelegten Kompressionswege kommen vorzugsweise Polyurethanweichschaum-Werkstoffe mit einer Dichte von 100 bis 900 kg/m³, insbesondere einer Dichte von 250 bis 600 kg/m³, in Betracht.

Damit ist es möglich, durch die Verwendung eines erfindungsgemäßen elastischen Elements je Radaufhängung sowohl eine optimale Dämpfung als auch eine optimale Federung bereitzustellen, die für ein einzelnes, im Fahrzeug transportiertes Kleinkind oder Baby mit einem Gewicht von 10 kg genauso wirksam ist wie für zwei Sechsjährige mit einem Gesamtgewicht von etwa 45 kg, ohne dass eine gewichtsabhängige Einstellung erforderlich ist.

Als besonders gesundheitsgefährdend für Humanschwingungen gelten neben dem Überfahren von großen Hindernissen mit hoher Geschwindigkeit (z.B. Schlaglöcher) stochastische Anregungen im Frequenzband zwischen 10 und 20 Hz mit relativ hohen Beschleunigungswerten, wie sie z.B. beim Überfahren einer Kopfsteinpflasterwegstrecke auftreten. Diese Schwingungsbelastungen insbesondere für Kleinstkinder zu reduzieren gelingt nur mit einem Federungssystem, welches in diesem Frequenzband hohe Dämpfungswerte aufweist. Insbesondere die genannten erfindungsgemäßen Polyurethanweichschaum-Werkstoffe weisen in diesem Frequenzbereich eine besonders hohe Dämpfungsrate auf.

Erfindungsgemäß stehen beide Radschwingen seitlich über das Chassis hinaus und können außen an den seitlichen Rahmenteilen des Chassis vorbei verschwenkt werden. Dadurch ist es möglich, den gefederten Weg der Schwinge konstruktiv frei festzulegen, ohne dass dadurch die Bauform des Chassis geändert werden müsste. Auf diese Weise ist es möglich, den Schwerpunkt des Fahrzeugs durch eine entsprechende Anordnung des elastischen Elements ohne eine unmittelbare vertikale Beschränkung durch das Chassis einzustellen. Insbesondere ist es auch möglich, den gefederten Weg der Radschwingen so einzustellen, dass sie in einer Ruheposition im Wesentlichen horizontal verlaufen und die Radachsen während der Fahrt eine Position oberhalb und unterhalb des seitlichen Rahmenteils einnehmen können. Somit ist auch der gefederte Weg der Radschwingen unabhängig vom Chassis festlegbar. Dies birgt insbesondere in Verbindung mit der Verwendung von elastischen Elementen aus einem Polyurethanweichschaum-Werkstoff die Möglichkeit, die Federung für das Fahrzeug für die zu transportierenden Insassen äußerst komfortabel einzustellen.

In einer bevorzugten Ausgestaltung dieser erfindungsgemäßen Lösung ist das elastische Element an einem Lagerelement mit einer Lagerfläche gehalten, die im Wesentlichen eben ausgebildet und schräg zur Horizontalen angeordnet ist. Eine ebene Lagerfläche hat den Vorteil, dass die von dem daran anliegende elastische Element übertragenen Kräfte im Wesentlichen gleichmäßig über die Lagerfläche verteilt aufgenommen werden und damit die federnde und dämpfende Wirkung des elastischen Elements optimal ausgenutzt werden kann. Ist die Lagerfläche schräg zur Horizontalen angeordnet, ist es möglich, die Radaufhängung so einzustellen, dass die Radschwingen in Ruhelage im Wesentlichen horizontal verlaufen. Empfehlenswert ist insbesondere, wenn die Längsachse der Radschwinge in Ruhelage in einem Winkelbereich von +/- 12 ° zur Horizontalen steht, insbesondere in einem Bereich von 0 bis -12° bei einer geschobenen Radschwinge und 0 bis 12° bei einer gezogenen Radschwinge (Winkelangaben bei Ansicht auf die Schwinge von der Seite, im Uhrzeigersinn). In den beiden letztgenannten Fällen liegt die Radachse in Ruhelage in Höhe oder etwas oberhalb der Drehachse der Schwingen. Damit ist der Hebel für vertikal vom Rad auf die Radschwinge wirkenden Kräfte am größten, so dass Stöße in dieser Lage optimal abgefedert werden können.

In einer bevorzugten Ausgestaltung dieser erfindungsgemäßen Lösung wirkt die von der Radschwinge auf das elastische Element wirkende resultierende Kraft in einer Ruhelage in einem Winkel schräg zur Flächennormalen der Lagerfläche, und der Winkel zwischen der resultierenden Kraft und der Flächennormalen wird mit zunehmender Last geringer. Damit wird erreicht, dass mit zunehmender Last das elastische Material über eine breitere Fläche parallel zur Lagerfläche komprimiert wird, das elastische Element damit härter wird. Dies gilt insbesondere dann, wenn das elastische Element aus einem Polyurethanweichschaum-Werkstoff besteht.

Eine weitere bevorzugte Ausgestaltung dieser Erfindung ist dadurch gekennzeichnet, dass das Lagerelement an einem seitlichen Rahmenteil des Chassis befestigt ist. Wenn das Lagerelement nicht durch das Rahmenteil selbst gebildet wird, besteht der Vorteil, dass die Position und Ausrichtung der Lagerfläche unabhängig von der Geometrie des seitlichen Rahmenteils gewählt werden kann. Es kann insbesondere auch seitlich des Chassis positioniert werden.

In einer weiteren Ausgestaltung der Erfindung ist das Lagerelement in verschiedenen Positionen in Längsrichtung am seitlichen Rahmenteil befestigbar. Dadurch lässt sich das Hebelverhältnis von Drehachse der Radschwinge und elastischem Element zu elastischem Element und Radachse einstellen. Damit kann die Ruhelage der Radschwinge für unterschiedliche Beladungen des Fahrzeugs eingestellt werden. Dies ist zwar bei Verwendung von elastischen Elementen aus einem Polyurethanweichschaum-Werkstoff nicht notwendig, aber kann für eine optimierte Einstellung der Federungs- und Dämpfungseigenschaften der Radaufhängung genutzt werden.

Unabhängig von der Einstellbarkeit der Position des Lagerelements am Chassis hat sich herausgestellt, dass besonders gute Feder- und Dämpfungseigenschaften bei einem geeigneten elastischen Element erreicht werden, wenn das Hebelverhältnis vom Abstand zwischen einer Achse des an einer Radschwinge gelagerten Rades und der Drehachse der Radschwinge zum kürzesten Abstand vom an der Radschwinge anliegenden elastischem Element zur Drehachse der Radschwinge im Bereich von 3:1 bis 7:1, vorzugsweise im Bereich von 4:1 bis 6:1 und insbesondere bei etwa 5:1 liegt.

Das aus einem PU-Weichschaum bestehende elastische Element kann vorzugsweise so ausgelegt werden, dass seine Verformung in einer Ruheposition der Radschwinge etwa 15 bis 35 % und bei zu erwartenden Spitzenlasten etwa 50 bis 70 % beträgt. Bei einer solchen Auslegung kann von einem hohen Fahrkomfort für die zu transportierenden Personen ausgegangen werden.

Das aus einem Polyurethanweichschaum-Werkstoff bestehende elastische Element ist bevorzugt scheibenartig mit einer im Wesentlichen konstanten Dicke ausgeführt. Dies hat insbesondere produktionstechnische Vorteile, da der Werkstoff in Matten gleichmäßiger Dicke hergestellt wird. Dabei wird das elastische Element vorzugsweise so angeordnet, dass die Richtung seiner Dicke quer zur Kompressionsrichtung verläuft.

Darüber hinaus weist das elastische Element, gegebenenfalls mit Ausnahme von Durchgangslöchern zu Befestigungszwecken, bevorzugt keine Ausnehmungen auf und besteht insoweit aus einem Vollmaterial.

Erfindungsgemäß variiert der Querschnitt des aus einem Polyurethanweichschaum-Werkstoff bestehenden, unbelasteten elastischen Elements in Kompressionsrichtung. In einer bevorzugten Ausführungsform ist die Kontur des aus einem Polyurethanweichschaum-Werkstoff bestehenden elastischen Elements in Umfangsrichtung, gegebenenfalls mit Ausnahme seiner Außenfläche zur Anlage an die Lagerfläche, gekrümmt und hat besonders bevorzugt etwa die Form eines Teilkreises oder eines Teilovals. Dadurch kann erreicht werden, dass mit zunehmender Kompression mehr Raumvolumen des elastischen Elements durch die Radschwinge komprimiert wird. Dadurch lässt sich die Steigung der Federkennlinie des elastischen Elements in Abhängigkeit von der anliegenden Last stufenlos festlegen. Wird eine vier- oder mehreckige Kontur für das elastische Element verwendet, kann die Federkennlinie ebenso in Abhängigkeit von der Last festgelegt werden, allerdings mit dem möglichen Nachteil, dass sich die Federkennlinie mit zunehmender Last nicht stufenlos ändert, und zwar dann, wenn sich das mit zunehmender Last zu komprimierende Raumvolumen des elastischen Elements nicht kontinuierlich verändert.

Bei Verwendung eines elastischen Elements mit gekrümmter Kontur kann es von Vorteil sein, wenn die mit dem elastischen Element in Verbindung stehende Kontaktfläche der Radschwinge eine konkave Krümmung aufweist, deren Krümmung geringer als die der damit zusammenwirkenden Kontaktfläche des elastischen Elements ist. Hiermit kann die lastabhängige Lage und Größe der Kontaktfläche zwischen elastischem Element und Radschwinge vorteilhaft beeinflusst werden.

In einer konstruktiv einfachen Ausgestaltung ist das Lagerelement für das aus einem Polyurethanweichschaum-Werkstoff gebildete, insbesondere scheibenartig ausgeführte, elastische Element mit Seitenwandungen versehen, die das elastische Element teilweise an gegenüberliegenden Seitenflächen einfasst. Außerdem ist mindestens ein Bolzen zum Sichern des elastischen Elements vorgesehen, der an beiden gegenüberliegenden Seitenwandungen gehalten und durch eine Durchgangsöffnung im elastischen Element hindurch geführt ist. Dabei ist es von besonderem Vorteil, wenn die Durchgangsöffnung im elastischen Element ein Langloch ist, das sich längs im Wesentlichen in Richtung der auf das elastische Element wirkenden Kräfte, insbesondere in Richtung der Flächennormalen der Lagerfläche, erstreckt. Dadurch wird vermieden, dass durch den oder die Bolzen der freie Kompressionsweg des elastischen Elements verkürzt wird.

In einer weiteren Ausgestaltung der erfindungsgemäßen Lösungen sind die Radschwingen über eine gemeinsame Achse miteinander verbunden. Durch die starre Verbindung beider Radschwingen können Wankbewegungen des Chassis (geringere Nickneigung), insbesondere in schnellen Kurvenfahrten und bei einseitigem Überfahren eines Hindernisses, bis zu einem bestimmten Grad reduziert und schneller wieder eine Ruhelage erreicht werden, was sich fahrstabilisierend auswirkt und damit bezogen auf die aktive Fahrsicherheit einen Sicherheitsgewinn darstellt. Die Bewegung der Radschwingen lässt sich dabei insbesondere gut mit einer Achse koppeln, die einen profilierten Querschnitt aufweist, auf deren Enden die Radschwingen mit entsprechend profilierten Ausnehmungen aufgesetzt sind. Profilierte Rohre haben gegenüber runden Rohren den Vorteil, dass sie Torsionsmomente besser übertragen können. Besonders bevorzugt sind Achsen aus einem sogenannten Kleeblattrohr.

Neben den besonderen Federungs- und Dämpfungseigenschaften weist die erfindungsgemäße Radaufhängung den weiteren wesentlichen Vorteil auf, dass sie mit nur drei Elementen realisierbar ist, nämlich mit einer Radschwinge, einem elastischen Element und einer Lagerung für das elastische Element.

Die Erfindung wird nachfolgend anhand von Figuren, in denen ein bevorzugtes Ausführungsbeispiel der Erfindung dargestellt ist, näher erläutert.

Es zeigen
- Fig. 1: eine isometrische Ansicht eines Chassis eines Fahrradanhängers mit einer erfindungsgemäßen Radaufhängung von vorne;
- Fig. 2: eine Seitenansicht eines Teils des in Figur 1 dargestellten Chassis;
- Fig. 3: eine isometrische Ansicht der erfindungsgemäßen Radaufhängung des in Figur 1 dargestellten Chassis von innen;
- Fig. 4: eine isometrische Ansicht des Halters für ein elastisches Element der in den Figuren 1 bis 3 dargestellten Radaufhängung; und
- Fig. 5: eine isometrische Ansicht des elastischen Elements der in den Figuren 1 bis 3 dargestellten Radaufhängung.

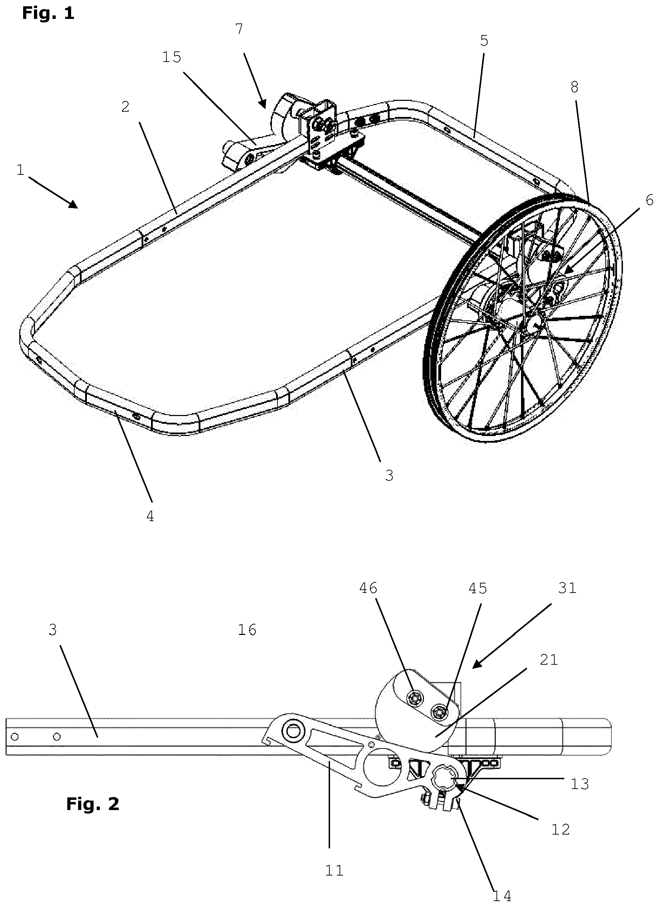

Figur 1 zeigt wesentliche Teile eines Chassis 1 oder Fahrgestells eines erfindungsgemäßen Fahrradanhängers. Das Chassis 1 weist zwei seitliche, in Längsrichtung des Fahrradanhängers verlaufende Rahmenteile 2, 3, ein in Fahrtrichtung vorderes und dazu quer verlaufendes Rahmenteile 4 sowie ein in Fahrtrichtung hinteres und dazu quer verlaufendes Rahmenteil 5 auf.

Im Bereich der hinteren Enden der seitlichen Rahmenteile 4, 5 sind Radaufhängungen 6, 7 montiert, an denen die Räder 8 (es ist nur eins dargestellt) des Fahrradanhängers befestigbar sind.

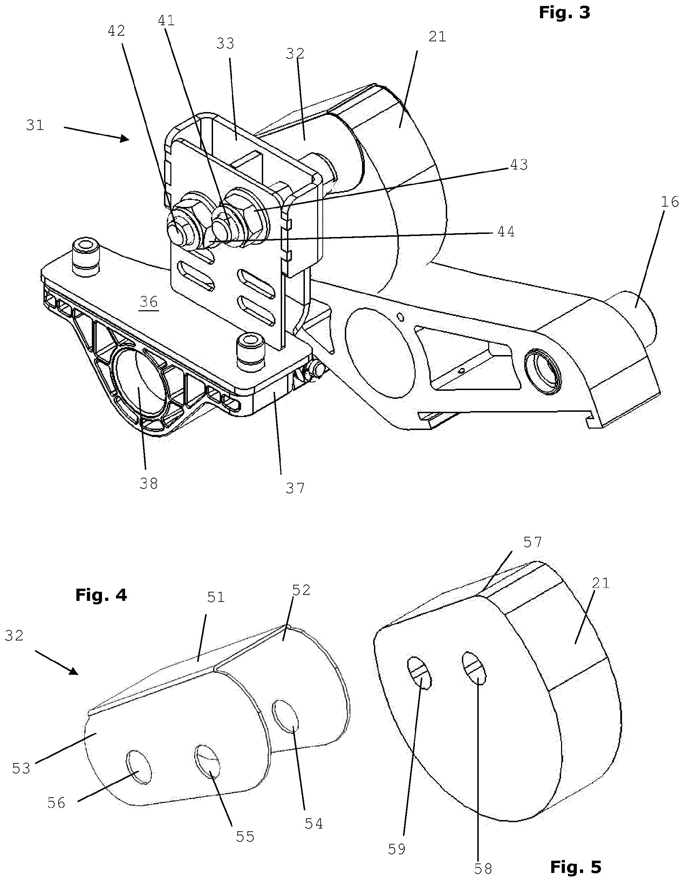

In den Figuren 2 und 3 sind die wesentlichen Teile der Radaufhängung 6 gezeigt. Die Radaufhängung 6 umfasst eine geschobene Radschwinge 11, die an einem ihrer Enden mit einer Ausnehmung 12 auf ein Achsrohr 13 aufgesteckt und daran mit Schrauben 14 festgeklemmt ist. Das Achsrohr 13 ist im dargestellten Ausführungsbeispiel als Kleeblattrohr mit einer kleeblattartigen Außenkontur ausgeführt, wobei die äußersten Konturflächen auf einer Kreisbahn liegen. Das Profil der Ausnehmung 12 der Radschwinge 11 ist entsprechend. Die Radschwinge 11 ist über das Achsrohr 13 starr mit der Radschwinge 15 (s. Fig. 1) auf der gegenüberliegenden Seite des Chassis 1 verbunden. An ihrem anderen Ende weist die Radschwinge 11 eine Lagerbuchse 16 zur Aufnahme einer Radachse (nicht dargestellt) auf.

Die Radschwinge 11 stützt sich über ein elastisches Element 21 am Chassis 1 ab. Hierfür ist das elastische Element 21 über eine Haltevorrichtung 31 am seitlichen Rahmenteil 3 befestigt.

Die Haltevorrichtung 31 weist unter anderem ein Lagerelement 32 auf, in dem das elastische Element 21 sitzt. Darüber hinaus sind ein erstes und ein zweites Befestigungsblech 33, 34 vorgesehen, die geeignet sind, das seitliche Rahmenteil 3 vollständig zu umgreifen, so dass, wenn die Befestigungsbleche 33 und 34 fest miteinander verbunden sind, diese am seitlichen Rahmenteil 3 fest sitzen. An der Unterseite des Befestigungsblechs 33 ist eine einstückig damit verbundene, horizontale Platte 36 vorgesehen. An der Unterseite der Platte 36 ist eine Achsrohraufnahme 37 angeschraubt. Zur drehbaren Lagerung des Achsrohres 13 weist die Achsrohraufnahme 37 eine Buchse oder Öffnung 38 auf, deren Achse quer zur Fahrtrichtung verläuft.

Zwei als Federbolzen wirkende Schraubbolzen 41, 42 sind jeweils quer durch das elastische Element 21, das Lagerelement 32 und die Befestigungsbleche 33 und 34 hindurchgesteckt und mit Muttern 43, 44, 45, 46 an ihren gegenüberliegenden Enden verschraubt. Sie sind in Fahrtrichtung gesehen in einem Winkel von etwa 40° nebeneinander angeordnet. Durch die Verschraubung ist die Haltevorrichtung 31 am Chassis 1 lösbar befestigt und kann bei Bedarf in Längsrichtung verschoben werden.

Das in Figur 4 dargestellte Lagerelement 32 besteht aus einem im Querschnitt U-förmigen Blech, dessen Bodenstück 51 eben ausgebildet ist und als Lagerfläche für das elastische Element 21 dient. Seitlich des Bodenstücks 51 verlaufen parallel und quer dazu zwei Seitenwandungen 52, 53 zum seitlichen Einfassen eines Teils des elastischen Elements 21. In den Seitenwandungen 52, 53 sind Bohrlöcher 54, 55, 56 vorgesehen, durch die die Schraubbolzen 41, 42 hindurch gesteckt werden. Alle Bohrlöcher sind zum Bodenstück 51 gleich beabstandet, so dass die Lagerfläche entsprechend der Anordnung der Schraubbolzen 41, 42 in einem Winkel von etwa 40° zum seitlichen Rahmenteil 3 verläuft.

In Figur 5 ist das elastische Element gezeigt. Es hat eine gleichmäßige Dicke und ist mit einer flachen Seite 57 ausgebildet, mit der das elastische Element 21 an der Lagerfläche des Lagerelements 32 anliegt. Im Übrigen ist die Außenkontur des elastischen Elements in nicht komprimiertem Zustand nahezu kreisrund. Im elastischen Element sind Durchgangslöcher 58, 59 für die Schraubbolzen 41, 42 vorgesehen. Die Durchgangslöcher sind als (wenn auch kurze) Langlöcher ausgebildet, so dass das elastische Element komprimiert werden kann, ohne dass die Schraubbolzen 41, 42 als Gegenlager wirken und den Federweg des elastischen Elements 21 wesentlich verkürzen.

Als besonders geeignetes Material für das elastische Element hat sich ein unter der Marke Sylomer® SR 450 vertriebener Polyurethanweichschaum erwiesen. Geeignete Materialdicken liegen beispielsweise im Bereich von 12,5 bis 25 mm.

Die Radaufhängung 7 auf der gegenüberliegenden Seite des Chassis ist entsprechend aufgebaut.

In den Figuren 1 und 2 ist die Radschwinge 6 in einer Ruheposition gezeigt, also in einer Position, in der der Fahrradanhänger unbeladen ist und steht, also nur seinem Eigengewicht und keinen Stößen durch Fahrbahnunebenheiten ausgesetzt ist. Die Radschwinge 6 verläuft in einem Winkel von weniger als 10° zur Horizontalen (hier gleichbedeutend mit der Ausrichtung des seitlichen Rahmenteils 3).

## Patentansprüche

1. Fahrradanhänger mit einer Radaufhängung, insbesondere zum Transport von Kindern, der ein Chassis (1) mit_seitlichen Rahmenteilen und mindestens zwei Räder (8) aufweist, die jeweils an einer Radschwinge (11, 15) gelagert sind, wobei für jede Radschwinge (11,. 15) mindestens ein elastisches Element (21) vorgesehen ist, über das sich die Radschwinge (11, 15) gegenüber dem Chassis (1) abstützt, und wobei beide Radschwingen (11, 15) seitlich über das Chassis (1) hinausstehen und an den seitlichen Rahmenteilen des Chassis vorbei verschwenkt werden können, **dadurch gekennzeichnet, dass** das elastische Element (21) aus mindestens einem formstabilen Polyurethanweichschaum-Werkstoff besteht und der Querschnitt des unbelasteten elastischen Elements (21) in Kompressionsrichtung variiert.

2. Fahrradanhänger nach Anspruchs 1, **dadurch gekennzeichnet, dass** das elastische Element (21) an einem Lagerelement (32) mit einer Lagerfläche (51) gehalten ist, die im Wesentlichen eben und in vertikaler Ebene schräg zum seitlichen Rahmenteil des Chassis angeordnet ist.

3. Fahrradanhänger nach Anspruch 2, **dadurch gekennzeichnet, dass** die von der Radschwinge (11, 15) auf das elastische Element (21) wirkende resultierende Kraft in einer Ruhelage in einem Winkel schräg zur Flächennormalen der Lagerfläche wirkt und der Winkel zwischen der resultierenden Kraft und der Flächennormalen mit zunehmender Last geringer wird.

4. Fahrradanhänger nach Anspruch 2 oder 3, **dadurch gekennzeichnet, dass** das Lagerelement (32) an einem seitlichen Rahmenteil (3, 4) des Chassis (1) befestigt ist.

5. Fahrradanhänger nach Anspruch 4, **dadurch gekennzeichnet, dass** das Lagerelement (32) in verschiedenen Positionen in Längsrichtung am seitlichen Rahmenteils (3, 4) befestigt werden kann.

6. Fahrradanhänger nach einem der Ansprüche 1 bis 5, **dadurch gekennzeichnet, dass** der oder die Polyurethanweichschaum-Werkstoffe ausgewählt sind aus der Gruppe Sylomer®, Sylodyn® und Cellasto®, und vorzugsweise Sylomer® ist.

7. Fahrradanhänger nach einem der Ansprüche 1 bis 6, **dadurch gekennzeichnet, dass** der mindestens eine Polyurethanweichschaum-Werkstoff eine Dichte von 100 bis 900 kg/m³, insbesondere eine Dichte von 250 bis 600 kg/m³ hat und/oder zumindest in einem Teilbereich eine progressive Federkennlinie hat und/oder im Frequenzbereich von 10 - 20 Hz eine hohe Dämpfungsrate aufweist.

8. Fahrradanhänger nach einem der Ansprüche 1 bis 7, **dadurch gekennzeichnet, dass** das elastische Element (21) scheibenartig mit einer im Wesentlichen konstanten Dicke ausgebildet ist.

9. Fahrradanhänger nach einem der Ansprüche 1 bis 8, **dadurch gekennzeichnet, dass** die Kontur des elastischen Elements (21) in Umfangsrichtung, gegebenenfalls mit Ausnahme seiner Außenfläche zur Anlage an die Lagerfläche (51), insbesondere gekrümmt ist, und darüber hinaus bevorzugt etwa die Form eines Teilkreises oder eines Teilovals hat.

10. Fahrradanhänger nach Anspruch 9, **dadurch gekennzeichnet, dass** die mit dem elastischen Element (21) in Verbindung stehende Kontaktfläche der Radschwinge (11, 15) eine konkave Krümmung aufweist, deren Krümmung geringer als die der damit zusammenwirkenden Kontaktfläche des elastischen Elements ist.

11. Fahrradanhänger nach einem der Ansprüche 1 bis 10, **dadurch gekennzeichnet, dass** mindestens eine der Kontaktflächen des elastischen Elements (21), die mit der am Chassis angeordneten Lagerfläche oder mit einer Lagerfläche an der Radschwinge in Kontakt steht, unter geringer Last in Ruheposition um mindestens 10 % kleiner als bei einer Stoßbelastung ist.

12. Fahrradanhänger nach einem der Ansprüche 1 bis 11, **dadurch gekennzeichnet, dass** das Hebelverhältnis vom Abstand zwischen einer Achse des an einer Radschwinge (11, 15) gelagerten Rades (8) und der Drehachse der Radschwinge (11, 15) zum kürzesten Abstand vom an der Radschwinge (11, 15) anliegenden elastischem Element (21) zur Drehachse der Radschwinge (11, 15) im Bereich von 3:1 bis 7:1, vorzugsweise im Bereich von 4:1 bis 6:1 und insbesondere bei etwa 5:1 liegt.

13. Fahrradanhänger nach einem der Ansprüche 1 bis 12, **dadurch gekennzeichnet, dass** das Lagerelement (32) das elastische Element (21) mit Seitenwandungen (52, 53) an gegenüberliegenden Seitenflächen teilweise einfasst, und dass mindestens ein Bolzen (41, 42) zum Sichern des elastischen Elements (21) vorgesehen ist, der an beiden gegenüberliegenden Seitenwandungen (41, 42) gehalten ist und durch eine Durchgangsöffnung (58, 59) im elastischen Element (21) hindurch geführt ist, wobei die Durchgangsöffnung (58, 59) im elastischen Element (21) vorzugsweise ein Langloch ist, das sich längs im Wesentlichen in Richtung der auf das elastische Element (21) wirkenden Kräfte erstreckt.

14. Fahrradanhänger nach einem der Ansprüche 1 bis 13, **dadurch gekennzeichnet, dass** die Radschwingen (11, 15) über eine gemeinsame Achse (13) miteinander verbunden sind, wobei die Achse (13) vorzugsweise einen profilierten Querschnitt aufweist, auf deren Enden die Radschwingen (11, 15) mit entsprechend profilierten Ausnehmungen (12) aufgesetzt sind.

## Claims

1. Bicycle trailer having a wheel suspension, in particular for the transportation of children, having a chassis (1) with lateral framework sections and at least two wheels (8), which are each mounted on respective wheel swing arms (11, 15), wherein with each respective wheel swing arm (11, 15) at least one elastic element (21) is associated, through which the respective swing arm (11, 15) supports itself via the chassis (1), and wherein both wheel swing arms (11, 15) protrude laterally from the chassis (1) and can be pivoted past the lateral framework sections of the chassis (1), **characterised in that** the elastic element (21) consists of at least one dimensionally-stable polyurethane foam material and that the cross-section of the elastic element (21), when not stressed, varies in a direction of compression.

2. Bicycle trailer according to claim 1, **characterised in that** the elastic element (21) is held on a bearing element (32) with a bearing surface (51), which is essentially level and is arranged slant to the lateral framework section of the chassis in a vertical plane.

3. Bicycle trailer according to claim 2, **characterised in that**, in a resting position, the resulting force acting on the elastic element (21) from the wheel swing arm (11, 15), acts at an oblique angle to the surface normal of the bearing surface, and that the angle between the resulting force and the surface normal becomes smaller the greater the load.

4. Bicycle trailer according to claim 2 or 3, **characterised in that** the bearing element (32) is mounted on a lateral framework section (3, 4) of the chassis (1).

5. Bicycle trailer according to claim 4, **characterised in that** the bearing element (32) can be mounted on the lateral framework section (3, 4) in different positions along a lengthwise direction.

6. Bicycle trailer according to one of claims 1 to 5, **characterised in that** the polyurethane foam material or materials are selected from the group consisting of Sylomer®, Sylodyn® and Cellasto®, and is preferably Sylomer®.

7. Bicycle trailer according to one of claims 1 to 6, **characterised in that** the at least one polyurethane foam material has a density of 100 to 900 kg/m³, preferably a density of 250 to 600 kg/m³, and/or has a progressive spring characteristic in at least one subarea and/or has a high attenuation rate in the frequency range from 10 to 20 Hz.

8. Bicycle trailer according to one of claims 1 to 7, **characterised in that** the elastic element (21) is pane-like having an essentially constant thickness.

9. Bicycle trailer according to one of claims 1 to 8, **characterised in that** the outline of the elastic element (21) is in particular curved in a circumferential direction but, if necessary, at the exterior surface, which is determined for contact with the bearing surface (51), and furthermore has preferably the approximate form of a pitch circle or a pitch oval.

10. Bicycle trailer according to claims 9, **characterised in that** the contact surface of the wheel swing arm (11, 15), which is in contact with the elastic element (21), has a concave bend, the curvature of which concave bend is lower than that of a contact surface of the elastic element converging with the concave bend.

11. Bicycle trailer according to one of claims 1 to 10, **characterised in that** at least one contact surface of the elastic element (21), which is in contact with the bearing surface arranged on the chassis or with a bearing surface on the wheel spring arm, is at least 10% smaller under a low load in a resting position than it is at an impact load.

12. Bicycle trailer according to one of claims 1 to 11, **characterised in that** the leverage ratio of the distance between an axle of a wheel mounted to the wheel swing arm (11, 15) and the rotation axis of the respective wheel swing arm (11, 15) to the shortest distance between the elastic element (21) in contact with the respective wheel swing arm (11, 15) and the rotation axis of the respective wheel swing arm (11, 15) lies within a range of 3:1 to 7:1, preferably within a range of 4:1 to 6:1 and in particular at approximately 5:1.

13. Bicycle trailer according to one of claims 1 to 12, **characterised in that** the bearing element (32) partly encloses the elastic element (21) at adjacent side surfaces by side walls (52, 53), and that at least one bolt (41, 42), which is mounted on both adjacent side walls (52, 53) and is put through a clearance hole (58, 59) in the elastic element (21), is arranged for securing the elastic element (21), wherein the clearance hole (58, 59) in the elastic element (21) preferably is an elongated hole, which extends lengthwise primarily in the direction of the forces working on the elastic element (21).

14. Bicycle trailer according to one of claims 1 to 13, **characterised in that** the wheel swing arms (11, 15) are connected to one another by a common axle (13), wherein the axle (13) preferably has a profiled cross-section, on ends of which the wheel swing arms (11, 15) are fitted with corresponding profile recesses (12).

## Revendications

1. Remorque de bicyclette comprenant une suspension de roue, en particulier pour le transport d'enfants, laquelle remorque comporte un châssis (1) pourvu de parties latérales de cadre et au moins deux roues (8), qui sont montées chacune sur un bras oscillant (11, 15), dans laquelle au moins un élément élastique (21), par l'intermédiaire duquel le bras oscillant (11, 15) s'appuie par rapport au châssis (1), est prévu pour chaque bras oscillant (11, 15), et dans laquelle les deux bras oscillants (11, 15) font saillie latéralement du châssis (1) et peuvent être amenés à pivoter en passant devant les parties latérales de cadre du châssis, **caractérisée en ce que** l'élément élastique (21) est constitué d'au moins un matériau en mousse souple de polyuréthane indéformable et la section transversale de l'élément élastique (21) non sollicité varie dans la direction de compression.

2. Remorque de bicyclette selon la revendication 1, **caractérisée en ce que** l'élément élastique (21) est retenu sur un élément d'appui (32) présentant une surface d'appui (51) qui est sensiblement plane et agencée dans le plan vertical en biais par rapport à la partie latérale de cadre du châssis.

3. Remorque de bicyclette selon la revendication 2, **caractérisée en ce que** la force résultante agissant du bras oscillant (11, 15) sur l'élément élastique (21) agit dans une position de repos en formant un angle de manière oblique par rapport à la normale à la surface de la surface d'appui et l'angle entre la force résultante et la normale à la surface diminue à mesure que la charge décroit.

4. Remorque de bicyclette selon la revendication 2 ou 3, **caractérisée en ce que** l'élément d'appui (32) est fixé à une partie latérale de cadre (3, 4) du châssis (1).

5. Remorque de bicyclette selon la revendication 4, **caractérisée en ce que** l'élément d'appui (32) peut être fixé dans différentes positions dans la direction longitudinale sur la partie latérale de cadre (3, 4).

6. Remorque de bicyclette selon l'une quelconque des revendications 1 à 5, **caractérisée en ce que** le ou les matériaux en mousse souple de polyuréthane sont sélectionnés dans le groupe Sylomer®, Sylodyn® et Cellasto®, et de préférence Sylomer®.

7. Remorque de bicyclette selon l'une quelconque des revendications 1 à 6, **caractérisée en ce que** ledit au moins un matériau en mousse souple de polyuréthane présente une densité de 100 à 900 kg/m³, en particulier une densité de 250 à 600 kg/m³ et/ou possède au moins dans une zone partielle une courbe caractéristique charge-déflexion progressive et/ou présente dans la plage de fréquences de 10-20 Hz un taux d'amortissement élevé.

8. Remorque de bicyclette selon l'une quelconque des revendications 1 à 7, **caractérisée en ce que** l'élément élastique (21) est réalisé sous la forme d'un disque d'une épaisseur sensiblement constante.

9. Remorque de bicyclette selon l'une quelconque des revendications 1 à 8, **caractérisée en ce que** le contour de l'élément élastique (21) dans la direction périphérique, le cas échéant à l'exception de la surface extérieure de celui-ci destinée à venir en appui contre la surface d'appui (51), est en particulier courbé, et présente en outre de préférence sensiblement la forme d'un arc de cercle ou d'une partie d'un ovale.

10. Remorque de bicyclette selon la revendication 9, **caractérisée en ce que** la surface de contact du bras oscillant (11, 15) reliée à l'élément élastique (21) présente une courbure concave dont la courbure est inférieure à celle de la surface de contact de l'élément élastique coopérant avec ledit bras.

11. Remorque de bicyclette selon l'une quelconque des revendications 1 à 10, **caractérisée en ce qu'**au moins l'une des surfaces de contact de l'élément élastique (21), qui est en contact avec la surface d'appui agencée sur le châssis ou avec une surface d'appui sur le bras oscillant, sous l'effet d'une faible charge dans la position de repos est moins élevée d'au moins 10 % que dans le cas d'une charge par à-coups.

12. Remorque de bicyclette selon l'une quelconque des revendications 1 à 11, **caractérisée en ce que** le rapport de levier de l'écart entre un essieu de la roue (8) montée sur un bras oscillant (11, 15) et l'axe de rotation du bras oscillant (11, 15) sur l'écart le plus court entre l'élément élastique (21) s'appliquant contre le bras oscillant (11, 15) et l'axe de rotation du bras oscillant (11, 15) se situe dans la plage de 3/1 à 7/1, de préférence dans la plage de 4/1 à 6/1 et est en particulier de sensiblement 5/1.

13. Remorque de bicyclette selon l'une quelconque des revendications 1 à 12, **caractérisée en ce que** l'élément d'appui (32) entoure l'élément élastique (21) au moyen de parois latérales (52, 53) sur des surfaces latérales opposées, et **en ce qu'**au moins un boulon (41, 42) est destiné à bloquer l'élément élastique (21) qui est retenu sur les deux parois latérales (41, 42) opposées et qui est guidé à travers un orifice de passage (58, 59) dans l'élément élastique (21), l'orifice de passage (58, 59) dans l'élément élastique (21) étant de préférence un trou oblong qui s'étend longitudinalement sensiblement en direction des forces agissant sur l'élément élastique (21).

14. Remorque de bicyclette selon l'une quelconque des revendications 1 à 13, **caractérisée en ce que** les bras oscillants (11, 15) sont reliés l'un à l'autre par un axe (13) commun, l'axe (13) présentant de préférence une section transversale profilée sur les extrémités de laquelle sont posés les bras oscillants (11, 15) présentant des évidements (12) profilés de manière correspondante.
